# EUROPEAN PATENT SPECIFICATION

(11) **EP 4 376 986 B1**
(45) Date of publication and mention of the grant of the patent: **16.04.2025**
(21) Application number: 22757285.6
(22) Date of filing: 28.07.2022
(51) Int. Cl.: B01D 53/86, B01J 21/04, B01J 23/00, B01J 23/72, B01J 23/80, B01J 35/50

(54) **NEW GEOMETRY FOR DEN2O CATALYST**
NEUE GEOMETRIE FÜR DEN2O-KATALYSATOR
NOUVELLE GÉOMÉTRIE POUR CATALYSEUR DEN2O

(30) Priority: 28.07.2021 EP 21188199
(43) Date of publication of application: 05.06.2024
(73) Proprietor: BASF SE, 67056 Ludwigshafen am Rhein (DE)
(72) Inventor: BEBENSEE, Regine Helga, 67056 Ludwigshafen (DE); BOHRES, Edward, 67056 Ludwigshafen (DE)
(74) Representative: BASF IP Association
(86) International application number: PCT/EP2022/071176
(87) International publication number: WO 2023/006867

(56) References cited:
- CN-A- 109 499 357
- DE-A1- 102010 005 105
- DE-A1- 19 819 882
- GB-A- 2 193 907
- US-A1- 2017 334 722
- US-A1- 2019 118 170

## Description

The present invention relates to a process for the catalytic decomposition of N₂O in a gas mixture obtained in the preparation of nitric acid by catalytic oxidation of ammonia. The invention further relates to a catalyst for the catalytic decomposition of N₂0, its use and a reactor which is suitable for carrying out the process.

In the industrial preparation of nitric acid by the Ostwald process, ammonia is reacted with oxygen over a noble metal catalyst to form oxides of nitrogen which are subsequently absorbed in water. In this process, ammonia and oxygen or air are reacted at from 800 to 955 °C over a catalyst gauze comprising noble metals in a reactor. The catalyst gauze generally comprises platinum and rhodium as active metals. In the catalytic reaction, ammonia is firstly oxidized to nitrogen monoxide which is subsequently further oxidized by oxygen to give nitrogen dioxide or dinitrogen tetroxide. The gas mixture obtained is cooled and then passed to an absorption tower in which nitrogen dioxide is absorbed in water and converted into nitric acid. The reactor for the catalytic combustion of ammonia also contains, downstream of the catalyst gauze, a recovery gauze for depositing and thus recovering catalyst metals which have been vaporized at the high reaction temperatures. A heat exchanger is located downstream of the recovery gauze to cool the gas mixture obtained. Absorption is carried out outside the actual reactor in a separate absorption column.

The combustion and the absorption can be carried out at the same pressure level. It is possible to employ an intermediate pressure of from about 230 to 600 kPa or a high pressure of from about 700 to 1100 kPa. In the case of a process with two pressure stages, the absorption is carried out at a higher pressure than the combustion. The pressure in the combustion is then from about 400 to 600 kPa and the pressure in the absorption is from about 900 to 1400 kPa.

An overview of the Ostwald process may be found, for example, in Ullmann's Encyclopedia of Industrial Chemistry, 5th edition, Volume A 17, pages 293 to 339 (1991).

The combustion of ammonia forms not only nitrogen monoxide and nitrogen dioxide or dinitrogen tetroxide but generally also N₂O (nitrous oxide, dinitrogen monoxide) as by-product. In contrast to the other oxides of nitrogen formed, N₂O is not absorbed by the water during the absorption step. If no further step for removing N₂O is provided, N₂O can be emitted into the environment in a concentration of from about 500 to 3000 ppm in the waste gas.

Since N₂O is a greenhouse gas, very substantial removal from the waste gas is desirable. Although N₂O is not the major contributor to global warming (-6%), it is much more potent than either of the other two most common anthropogenic greenhouse gases, CO₂ and CH₄. Due to its long lifetime of approximately 150 years in the atmosphere, N₂O has 310 and 21 times the Global Warming Potential of CO₂ and CH₄, respectively.

A number of methods of removing N₂O from waste gas streams have been described. Development of N₂O abatement systems aims at the achievement of high efficiency (>90% N₂O conversion) and selectivity (<0.2% NO loss). The approaches followed by industry, research institutes, and universities can be classified in four groups, according to the position in the process (J. Pérez-Ramirez et al., Applied Catalysis B: Environmental 44 (2003) 117 - 151):
- Primary abatement measures aim at preventing N₂O being formed in the ammonia burner. This involves modification of the ammonia oxidation process and/or catalyst.
- Secondary abatement measures remove N₂O from the valuable intermediate stream, i.e. from the NOxgases between the ammonia converter and the absorption column. Usually this will mean intervening at the highest temperature, immediately downstream of the ammonia oxidation catalyst.
- In tertiary abatement measures, the tail-gas leaving the absorption column is treated to destroy N₂O. The most promising position for nitrous oxide abatement is upstream of the tail-gas expansion turbine.
- Quaternary abatement measures are the pure *end of-pipe* solution, where the tail-gas is treated downstream of the expander, on its way to the stack.

DE-A-195 33 715 describes a process for removing nitrogen oxides from a gas stream, in which the nitrogen oxides apart from N₂O are absorbed in an absorption medium and remaining N₂O is subsequently decomposed catalytically at from 700 to 800 °C in a decomposition reactor. Since nitrogen oxides can be formed in this decomposition, a selective catalytic reduction (SCR) can follow.

U.S. Pat. No. 5,478,549 describes a process for preparing nitric acid by the Ostwald method, in which the N₂O content is reduced by passing the gas stream after the oxidation over a catalyst bed of zirconium oxide in the form of cylindrical pellets at a temperature of at least 600 °C.

EP-B 0 359 286 describes a process for the reduction of N₂O. For this purpose, a reactor for carrying out the Ostwald process is modified in such a way that the gases obtained after the catalytic combustion are subjected to a retention time of from 0.1 to 3 seconds before cooling by means of the heat exchanger. If desired, a catalyst for the selective decomposition of N₂O can be additionally provided.

US 6,743,404 B1 discloses a process for the catalytic decomposition of nitrous oxide N₂O in a gas mixture obtained in the preparation of nitric acid by catalytic oxidation of ammonia in a reactor which contains in this order in the flow direction a noble metal gauze catalyst and a heat exchanger over a catalyst for the decomposition of N₂O which is installed between the noble metal catalyst and the heat exchanger so that the hot gas mixture obtained from the catalytic oxidation of ammonia is brought into contact with the catalyst for the decomposition of N₂O before subsequent cooling. The catalyst for the decomposition of N₂O contains copper aluminate CuAl₂O₄ and preferably a further metal oxide, in particular ZnO. It is generally said that the catalyst is preferably used in the star extrudate form. However, a specific catalyst form is not disclosed. The object underlying the present invention is to provide an improved catalyst for the decomposition of N₂O which has an improved geometry, combining high geometric outer surface area (GSA) with low pressure drop and preferably also with high mechanical stability, specifically high side and/or bulk crushing strength, under practical conditions in a packed catalyst bed.

Documents GB 2193907 A and US 2019118170 A1 generally disclose star shaped catalyst bodies having six lobes.

The invention is based thereon that the inventors have now been able to provide a star-shaped extrudate, having an optimum GSA and pressure drop, preferably combined with a high side and/or bulk crushing strength.

The object is achieved by a process for the catalytic decomposition of nitrous oxide N₂O in a gas mixture obtained in the preparation of nitric acid by catalytic oxidation of ammonia, in a reactor which contains in this order in the flow direction a noble metal gauze catalyst and a heat exchanger, over a catalyst for the decomposition of N₂O which is installed between the noble metal gauze catalyst and the heat exchanger so that the hot gas mixture obtained from the catalytic oxidation of ammonia is brought into contact with the catalyst for the decomposition of N₂O before subsequent cooling, characterized in that the catalyst is in the form of a star-shaped body having six lobes, wherein the ratio of the maximum radius r2 in the star to radius r1 of a circle connecting the intersections of the lobes is in the range from 1.9 to 3.61, the ratio of the area F1 inside this circle to the summed area F2 of the lobes outside this circle is in the range of from 0.54 to 0.90, the ratio of the distance x2 between the two intersections I of one lobe with neighboring lobes and the radius r1 of the circle is in the range of from 0.67 to 1.11.

Preferably, in the star-shaped catalyst body having a cross-section having six lobes, used according to the present invention, the ratio of the maximum radius r2 in the star to radius r1 of a circle connecting the intersections of the lobes is in the range of from 1.9 to 3.0 or 2.17 to 3.61, more preferably from 1.9 to 2.5.

Preferably, the cross-section of the body has six axes of mirror symmetry, so that the six lobes have an identical shape.

The mirror symmetry allows for a slight deviation from mirror symmetry. Preferably, at most one or two lobes deviate from the six axes of mirror symmetry. Thus, one or two lobes might be of different size or slightly inclined with regard to the other lobes, while still fulfilling the above geometrical requirements for the star-shaped catalyst body.

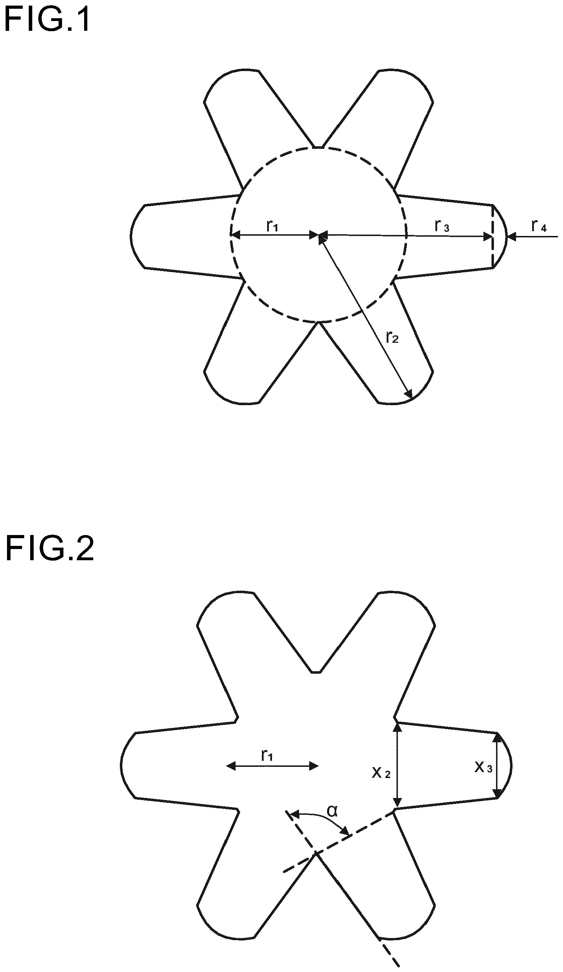

The mirror symmetry allows for a maximum of 10% deviation from ideal mirror symmetry, more preferably of 5% or less deviation from ideal mirror symmetry. Most preferably, the cross-section of the body has six axes of mirror symmetry without deviation from mirror symmetry. The mirror symmetry can be seen in Fig. 1 and Fig. 2, where six identical lobes are depicted.

According to the present invention, N₂O can be reacted directly in the reactor for the catalytic oxidation of ammonia when a suitable catalyst is located between the noble metal gauze catalyst and the heat exchanger. In this way, N₂O formed as by-product is decomposed immediately after it is formed. The decomposition occurs at the temperature prevailing in the catalytic oxidation of ammonia. Heating or cooling of the gaseous reaction mixture is thus unnecessary. The catalyst for the decomposition of N₂O which is used according to the present invention is located directly in the reactor, preferably between the position of a noble metal recovery gauze located downstream of the noble metal catalyst and the position of the heat exchanger. Reactors for the Ostwald process are usually provided with inserts for accommodating the noble metal catalyst and the noble metal recovery gauze. These reactors can easily be modified by additionally providing a holder for the N₂O decomposition catalyst.

The low catalyst bed height required according to the present invention allows installation in existing reactors without great rebuilding of the reactors. Thus, existing reactors can be modified to enable the process of the present invention to be carried out, without replacement of the reactor being necessary. The Ostwald process can be carried out at one pressure level or at two pressure levels, as described above. The height of the catalyst bed is preferably from 2 to 50 cm, particularly preferably from 5 to 25 cm. In production, the residence time over the catalyst is preferably less than 0.1 s. The pressure drop caused by installation of the catalyst is therefore very low, a small amount of catalyst can be employed, and the gas has to be held at a high temperature level for only a short time after the oxidation, so that secondary reactions can largely be suppressed.

According to the present invention, the decomposition of N₂O is carried out in the reactor for the oxidation of ammonia at the oxidation temperature, generally at a temperature in the range from 600 to 950 °C., preferably from 800 to 930 °C., in particular from 850 to 920 °C. The pressure is, depending on the pressure level at which the Ostwald process is carried out, generally from 1 to 15 bar.

As noble metal gauze catalyst, it is possible to use any noble metal gauze catalyst suitable for the catalytic oxidation of ammonia. The catalyst preferably comprises platinum and possibly rhodium and/or palladium as catalytically active metals. The noble metal recovery gauze is preferably made of palladium.

The catalyst used according to the present invention for the decomposition of N₂O is selected from among catalysts which still have sufficient activity at above 900 °C to decompose N₂O at this temperature in the presence of NO and/or NO₂. Catalysts which are suitable for the purposes of the present invention are, for example, binary oxides such as MgO, NiO, ZnO, Cr₂O₃, TiO₂, WOₓ, SrO, CuO/Cu₂O, Al₂O₃, Se₂O₃, MnO₂ or V₂O₅, if desired doped with metal oxides, lanthanide complexes such as La₂NiO₄, La₂CuO₄, Nd₂CuO₄ and multinary oxide compounds thereof, spinels, ternary perovskites, and also oxidic systems such as CuO-ZuO-Al₂O₃CoO-MgO, CoO-La₂O₃, CO-ZuO, NiO-MoO₃ or metals such as Ni, Pd, Pt, Cu, Ag.

The catalyst is preferably a copper-containing catalyst, containing a compound of the formula MₓAl₂O₄, where M is Cu or a mixture of Cu with one or more further metals M, selected from the group consisting of Sn, Pb, Zn, Mg, Ca, Sr and Ba, preferably Zn, Mg, Ca, Sr and/or Ba, more preferably Zn and/or Mg, and x is from 0.6 to 1.5.

The preferred catalysts consists essentially of an essentially spinel phase which may still contain small amounts of free oxides in crystalline form, such as MO (where M is Cu, Zn or Mg) and M₂O₃ (where M is Al). The presence of a spinel phase can be detected by recording XRD spectra. The amount of the oxides in the catalyst is in general from 0 to 5, preferably from 0 to 3.5% by weight.

The amount of Cu and any Zn and/or Mg should be chosen such that a filled or virtually filled spinel is obtained. This means x in the formula MₓAl₂O₄ is from 0.6 to 1.5, preferably from 0.8 to 1.5, more preferably from 0.9 to 1.2, particularly preferably from 0.95 to 1.1. For x values below 0.6, the thermal stability is substantially lost. x values above 1.5 likewise lead to a deterioration in the catalyst activity and catalyst stability. The catalyst having an x value of from 0.6 to 1.5, preferably from 0.8 to 1.5, more preferably from 0.9 to 1.2, particularly preferably from 0.95 to 1.1, in the formula MₓAl₂O₄ is thus a high temperature-stable catalyst for decomposition of N₂O. The catalyst has advantageous aging behavior, i.e. the catalyst remains active for a long time without being thermally deactivated.

The catalyst contains copper in oxide form, calculated as copper oxide CuO, in an amount of in general from 1 to 54, preferably from 5 to 40, particularly preferably from 10 to 30, % by weight, based on the total catalyst.

The catalyst may additionally contain further dopants, in particular Zr and/or La, in oxide form. Doping with Zr and/or La further increases thermal stability of the catalysts, but the initial activity is slightly reduced. It is particularly advantageous to introduce Zr and/or La dopants via corresponding element-doped aluminum oxides. The content of the dopant compounds in the novel catalyst is in general from 0.01 to 5.0% by weight, preferably from 0.05 to 2% by weight.

The catalyst may contain further metallic active components. Such metallic active components are preferably metals of the 8th subgroup of the Periodic Table of the Elements, particularly preferably Pd, Pt, Ru or Rh. As a result, it is possible to obtain catalysts which not only are very active at high temperatures but have a very high activity at temperatures as low as below 400 °C. The catalysts can therefore be used in a wide temperature range, which is a major advantage in the case of adiabatically operated N₂O decomposition processes. The amount of the metals of the 8th subgroup in the novel catalyst is in general from 0.01 to 5% by weight, preferably from 0.1 to 2% by weight.

Such a catalyst can be prepared, for example, by combining CuAl₂O₄ with one or more further metals M, selected from the group consisting of Sn, Pb, Zn, Mg, Ca, Sr and Ba as oxide or salt or in elemental form, and subsequently calcining the mixture at from 300 to 1300°C and a pressure in the range from 0.1 to 200 bar.

In one embodiment, the catalyst is preferably prepared using zinc, magnesium, calcium, strontium and/or barium as oxide or salt or in elemental form in addition to CuAl₂O₄. The catalyst is preferably free of noble metals.

The present invention also relates to a catalyst body for the decomposition of N₂O as described herein, wherein the catalyst contains a compound of the formula MₓAl₂O₄, where M is Cu or a mixture of Cu with one or more further metals M, selected from the group consisting of Sn, Pb, Zn, Mg, Ca, Sr and Ba, preferably Zn, Mg, Ca, Sr and/or Ba, more preferably Zn and/or Mg, and x is from 0.6 to 1.5.

To prepare the catalyst, use is made of CuAl₂O₄ of which from 1 to 100% by weight, preferably from 10 to 100% by weight, particularly preferably from 80 to 100% by weight, is present as spinel. It is particularly preferably completely in the form of spinel. Mixing with one or more further metals M, selected from the group consisting of Sn, Pb, Zn, Mg, Ca, Sr and Ba, is preferably carried out at from 500 to 1200 °C., particularly preferably from 600 to 1100 °C., and preferably at pressures of from 0.5 to 10 bar, particularly preferably at atmospheric pressure. Mixing can be carried out, for example, by spraying, mechanical mixing, stirring or kneading of the milled solid of the composition CuAl₂O₄. Particular preference is given to impregnation of the unmilled solid. During the calcination after the mixing with the additive, the copper is preferably replaced at least partly by the additional metal. The finished catalyst preferably comprises at least 70%, particularly preferably at least 80%, in particular at least 90%, of a spinel phase.

It is possible to use not only oxides of the metals or the metals in metallic form, but also their salts. Examples are carbonates, hydroxides, carboxylates, halides and oxidic anions such as nitrites, nitrates, sulfides, sulfates, phosphites, phosphates, pyrophosphates, halites, halates and basic carbonates. Preference is given to carbonates, hydroxides, carboxylates, nitrites, nitrates, sulfates, phosphates and basic carbonates, particularly preferably carbonates, hydroxides, basic carbonates and nitrates. The additional metal is particularly preferably in the oxidation state +2. Preference is given to using Zn, Mg, Ca, Sr and/or Ba, in particular Zn and/or Mg.

The preparation of the starting oxide of the composition CuAl₂O₄, preferably in the form of a spinel, is known from, for example, Z. Phys. Chem., 141 (1984), pages 101 to 103. Preference is given to impregnating an Al₂O₃ support with a solution of an appropriate salt. The anion is then preferably decomposed thermally to form the oxide. It is also possible to mix the salt with the aluminum compound (for example in suspension with subsequent spray drying), compact it and then bring it into the desired shape, followed by calcination.

The catalyst preferably comprises from 0.1 to 30% by weight of CuO, from 0.1 to 40% by weight of the further metal oxide M(II)O of the one or more of the further metals, selected from the group consisting of Sn, Pb, Zn, Mg, Ca, Sr and Ba, in particular ZnO, and from 50 to 80% by weight of Al₂O₃.

Apart from the spinel, preferably small amounts of CuO and further metal oxide are also present. Preferably, not more than 3.5% by weight of CuO and not more than 10% by weight of ZnO are present.

Suitable catalysts are also described in DE-A-43 01 469 and EP-A-0 687 499. Further examples of preparations of catalysts which can be used according to the present invention may be taken from the documents cited.

The catalyst preferably has a BET surface area of from 1 to 350 m²/g. The porosity is preferably in the range from 0.01 to 0.8 l/g.

According to the present invention, the catalyst is preferably used in the star extrudate form described as a fixed bed. The thickness of the fixed bed is preferably from 2 to 50 cm, particularly preferably from 5 to 25 cm. The residence time over the catalyst for the decomposition of N₂O is preferably less than 0.1 s.

The use of the catalyst directly in the reactor for the catalytic oxidation of ammonia leads to complete degradation of N₂O, with nitrogen oxides being formed. The nitrogen oxides formed in the oxidation of ammonia are not degraded over this catalyst. The catalyst has a high activity. As a result of the low height of the catalyst bed and the star shape of the catalyst having six lobes, only a small pressure drop occurs in the reactor. No additional heating or cooling is required for the removal of N₂O. Since the reactors are built for accommodating catalyst gauzes, rebuilding of a nitric acid plant is generally not necessary.

The catalyst body can be formed by various techniques including extrusion, additive manufacturing (like 3D printing) or tableting. Preferably, the ceramic bodies are prepared by extrusion.

Star-shaped bodies or extrudates can be defined as objects having some kind of central part or core, with three or more extensions on the circumference thereof. An advantageous property of the star-shaped extrudates is the fact that the ratio of geometric surface area to volume is more advantageous than in the case of conventional cylindrical extrudates or tablets.

According to the present invention, it has been found that by employing this specific six lobe geometry of the catalyst body, the geometric surface area GSA can be maximized while minimizing the pressure drop in a packed bed of the catalyst bodies, preferably extrudates, with regard to known star-shaped extrudates. Specifically, the gain in GSA can be higher than the penalty in the pressure drop experienced in such packed bed. Furthermore, a high side and/or bulk crushing strength can be obtained.

The gain in geometric surface area GSA in relation to a pressure drop is specifically achieved in a packed bed, so that not only the behavior of an individual extrudate is improved, but also the behavior of a packed bed of the extrudate.

The star-shaped catalyst bodies according to the present invention combine an advantageous property profile including high geometric surface area GSA and low pressure drop when in a packed bed. They preferably also are mechanically stable, and preferably have a high side crushing strength, high bulk crushing strength, and low attrition.

A high geometric surface area typically leads to a high activity of the catalyst bodies in particular in chemical reactions that are mass-transfer (diffusion) limited.

According to the present invention it has been found that a six-lobe star-shaped catalyst body, is superior to a five-lobe star-shaped extrudate.

Among other parameters, the size (diameter, length) of the catalyst body or catalyst extrudate, the slope of the lobes from intersection to top, the number of lobes, the sharpness of lobes, the depth of lobes and the size of the extrudates were varied, leading to the above improved star-shaped catalyst body or extrudate. The lobes can also be described as flutes or fingers of the stars.

The advantageous properties of the catalyst bodies, preferably extrudates, shall be maintained for a long time upon practical use, in which attrition of the catalyst bodies cannot be totally avoided. By employing the specific shape according to the present invention, however, a long-term stability of the properties of the catalyst bodies, can be achieved.

The geometry of the preferred star-shaped catalyst bodies used according to the present invention can be further illustrated with regard to Fig. 1 and 2 showing a cross-sectional view of the body or extrudate. The die used for extrusion will have openings of this shape, taking into consideration a possible shrinking of the paste after extrusion upon drying and possible calcination.

Fig. 1 and 2 show a six-lobe star shape, wherein the major part of the lobe outer walls is straight.

A circle connecting the intersections of the lobes, as shown in Fig. 1, has a radius r1, whereas the maximum radius extends from the center of the cross-section to the maximum radius, i.e. the farthest end of the lobes, denoted r2. The ratio of the maximum radius r2 in the star to radius r1 of the circle connecting the intersections of the lobes is in the range of from 1.9 to 3.61, preferably from 1.9 to 3.0 or 2.17 to 3.61, most preferably from 1.9 to 2.5.

The ratio x2 to r1 is 0.67 to 1.11, preferably 0.80 to 0.98, more preferably 0.85 to 0.93, for example 0.90.

The ratio of the area F1 inside this circle to the summed area F2 of the lobes outside the circle is in the range of from 0.54 to 0.90, preferably from 0.65 to 0.79, most preferably from 0.68 to 0.76, for example 0.72.

Fig. 1 also shows a radius r3 which extends to the endpoints of the straight part of the lobes, starting at the center of the cross-section and ending at the middle point of a straight line connecting the two endpoints of the straight sides of one lobe.

The ratio r2 to r3 is preferably from 0.80 to 1.33, more preferably from 0.95 to 1.17, most preferably from 1.01 to 1.11, for example 1.06.

Preferably, each lobe has straight outer walls and a rounded top. Preferably, each lobe has straight outer walls with a rounded top, wherein the ratio of the length x1 from the intersection I of one lobe with neighboring lobes to the end of the straight walls to the distance x2 between two intersections I of one lobe with neighboring lobes is from 0.87 to 1.45, more preferably 1.04 to 1.28, most preferably 1.10 to 1.22, for example 1.16. The distance x2 is shown in Fig. 2.

Preferably, each lobe has straight outer walls with a rounded top, wherein the angle α between the straight wall and the straight line x2 between two intersections I of one lobe with neighboring lobes is from 70 to 140 degrees, preferably from 92 to 102 degrees, more preferably 94 to 100 degrees, most preferably 96 to 98 degrees, for example 97 degrees. This angle is also shown in Fig. 2.

Preferably, the ratio of the length x2 between two intersections I of one lobe with neighboring lobes to the length x3 between the ends of the straight walls is from 0.9 to 1.8, preferably from 1.01 to 1.69, more preferably 1.22 to 1.49. The respective lengths x2 and x3 as well as the intersections I are shown in Fig. 2.

Preferably, each lobe has straight outer walls with a rounded top, and the ratio of the lobe area of the trapeze confined by the straight walls of a lobe and the outer-lobe area outside this trapeze is from 2.5 to 14.35, preferably from 9.36 to 14.25, more preferably 10.33 to 12.63, most preferably 10.90 to 12.05, for example 11.48. The trapeze area F3 and the outer lobe area F4 are shown in Fig. 2.

The rounded top has a radius of preferably 0.23 to 0.38 mm, more preferably 0.27 to 0.33 mm, most preferably 0.29 to 0.32 mm, for example 0.30 mm.

Preferably, the cross-section area of the extrudate is from 0.19 to 13.9 mm², preferably from 5 to 11 mm², preferred from 6 to 9 mm².

Preferably, the maximum radius r2 is from 0.4 to 6 mm, preferably from 0.9 to 6 mm, preferred from 1.35 to 2.25 mm, more preferably 1.62 to 2.1 mm.

As indicated above, the use of star-shaped extrudates is important in terms of pressure drop in relation to accessibility of the external surface of the extrudates. This also plays an important role in eliminating diffusion problems.

The present invention also relates to the use of a star shaped catalyst body as defined herein for the decomposition of N₂O in N₂O containing gas mixtures.

The present invention further relates to a reactor for the catalytic decomposition of nitrous oxide N₂O in a gas mixture obtained in the preparation of nitric acid by catalytic oxidation of ammonia which contains in this order in the flow direction a noble metal gauze catalyst, a heat exchanger and a catalyst bed for the decomposition of N₂O which is installed between the noble metal catalyst and the heat exchanger so that the hot gas mixture obtained from the catalytic oxidation of ammonia is brought into contact with the catalyst for the decomposition of N₂O before subsequent cooling, characterized in that the catalyst bed contains the catalyst for the decomposition of N₂O in the form of a star-shaped body having six lobes as defined above.

### Example

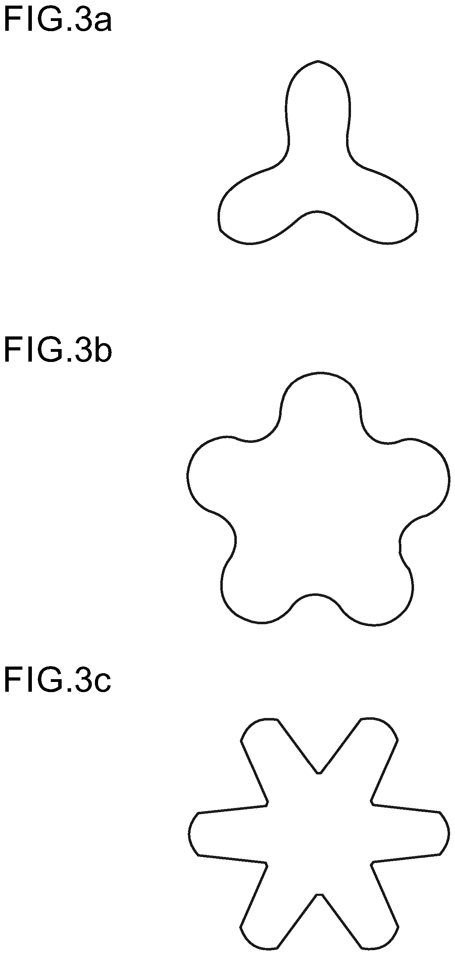

The table shows an overview of the calculated properties of the prior art geometries (Fig. 3a, 3b) and the geometry according to the invention (Fig. 3c) in two different sizes. The small trilobes have a high GSA/volume ratio, the large five-pointed stars have a low pressure drop. The new geometry combines these two beneficial features.

The values for delta p are calculated based on CFD (Computational Fluid Dynamics). GSA is the surface area of the modeled catalyst geometry in the simulations and the volume respectively. Both are the numerically calculated values from the catalyst model and based on the real geometries.

The geometric surface area (GSA) and pressure drop for a packed bed of the extrudates of different shapes and sizes were obtained from a detailed numerical simulation.

First, a random packing is generated with a simulation using a representative geometry of a reactor tube and the real geometry of the catalyst. The packing is generated by virtually dropping the catalyst particles into the reactor tube and calculating the movement and impacts between particle-particle and particle-wall contacts according to Newton's second law of motion. A discrete element soft-sphere algorithm is used as numerical method. The pressure drop is the result of a detailed simulation applying computational fluid dynamics. The fluid volume is extracted from the numerically generated random packed bed. The fluid dynamics around each pellet as well as all interstitial flow phenomena are fully resolved. The pressure drop is then calculated for an assumed bed height of 84 mm and an assumed inner tube diameter of 56 mm. Compressed air is used as fluid. The pressure at the end of the packed bed is ambient pressure. The assumed temperature is ambient temperature. The assumed flow rate is 1.5 Nm₃/h. The six-star extrudates according to the invention are compared to a five-star extrudate and a modified trilobe extrudate as references. All extrudates had an assumed length of 10 mm.

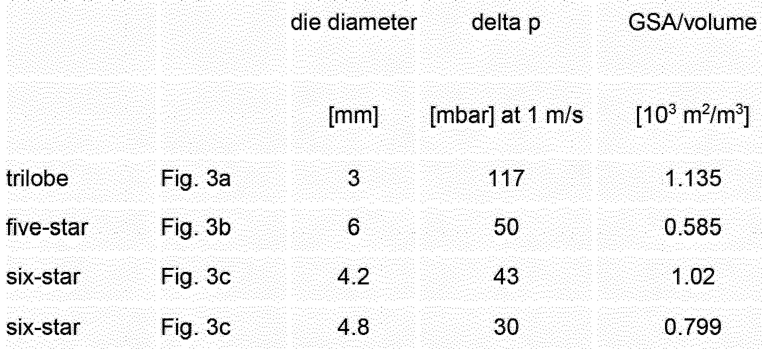

## Claims

1. A process for the catalytic decomposition of nitrous oxide N₂O in a gas mixture obtained in the preparation of nitric acid by catalytic oxidation of ammonia, in a reactor which contains in this order in the flow direction a noble metal gauze catalyst and a heat exchanger, over a catalyst for the decomposition of N₂O which is installed between the noble metal gauze catalyst and the heat exchanger so that the hot gas mixture obtained from the catalytic oxidation of ammonia is brought into contact with the catalyst for the decomposition of N₂O before subsequent cooling, **characterized in that** the catalyst is in the form of a star-shaped body having six lobes, wherein the ratio of the maximum radius r2 in the star to radius r1 of a circle connecting the intersections of the lobes is in the range from 1.9 to 3.61, the ratio of the area F1 inside this circle to the summed area F2 of the lobes outside this circle is in the range of from 0.54 to 0.90, the ratio of the distance x2 between the two intersections I of one lobe with neighboring lobes and the radius r1 of the circle is in the range of from 0.67 to 1.11.

2. A process according to claim 1, wherein the catalyst for the decomposition of N₂O contains compound of the formula MₓAl₂O₄, where M is Cu or a mixture of Cu with one or more further metals M, selected from the group consisting of Sn, Pb, Zn, Mg, Ca, Sr and Ba, and x is from 0.6 to 1.5.

3. The process according to claim 1 or 2, wherein the ratio of radius r2 to radius r1 is from 1.9 to 3.0.

4. The process according to any one of claims 1 to 3, wherein each lobe has straight outer walls with a rounded top, wherein the ratio of the length x1 from the intersection I of one lobe and neighboring lobes to the end of the straight outer wall to the distance x2 between two intersections I of one lobe and neighboring lobes is from 0.87 to 1.45.

5. The process according to any one of claims 1 to 4, wherein each lobe has straight outer walls with a rounded top, wherein the angle α between the straight outer wall and the straight line x2 between two intersections I of one lobe and neighboring lobes is from 70 to 140 degrees.

6. The process according to any one of claims 1 to 5, wherein each lobe has straight outer walls with a rounded top, wherein the ratio of the length x2 between two intersections I of one lobe and neighboring lobes to the length x3 between the ends of the straight outer walls is from 0.9 to 1.8.

7. The process according to any one of claims 1 to 6, wherein each lobe has straight outer walls with a rounded top and the ratio of the lobe area of the trapeze F3 confined by the straight outer walls of a lobe and the outer lobe area F4 outside this trapeze is from 2.5 to 14.35.

8. The process according to any one of claims 1 to 6, wherein the cross-section area is from 0.19 to 13.9 mm².

9. The process according to any one of claims 1 to 8, wherein the maximum radius r2 is from 0.4 to 6 mm, preferably from 1.35 to 2.25 mm or from 1.62 to 3.1 mm.

10. The process according to any one of claims 1 to 9, wherein the circle radius r1 is from 0.25 to 3.4 mm.

11. The process according to claim 1 to 10, wherein the elemental composition of the catalyst corresponds to an oxidic mixture containing form 50 to 80 % by weight of Al₂O₃, 0.1 to 30 % by weight of CuO and 0.1 to 40 % by weight of oxides M(II)O of the one or more of the further metals.

12. The process according to claim 10 or 11, wherein the further metal is Zn.

13. The process according to any one of claims 1 to 12, wherein at least 70% by weight of the catalyst for the decomposition of N₂O are in the spinel phase.

14. The process according to any one of claims 1 to 13, wherein the height of the catalyst bed of the catalyst for the decomposition of N₂O is 2 to 50 cm.

15. The process according to any one of claims 1 to 14, wherein the decomposition of N₂O is carried out at from 600 to 950 °C at a pressure of from 1 to 15 bar.

16. Star shaped catalyst body having six lobes for the decomposition of N₂O containing compound of the formula MₓAl₂O₄, where M is Cu or a mixture of Cu with one or more further metals M, selected from the group consisting of Sn, Pb, Zn, Mg, Ca, Sr and Ba, and x is from 0.6 to 1.5, wherein the ratio of the maximum radius r2 in the star to radius r1 of a circle connecting the intersections of the lobes being in the range from 1.9 to 3.61, preferably from 2.17 to 3.61, the ratio of the area F1 inside this circle to the summed area F2 of the lobes outside this circle being in the range of from 0.54 to 0.90, the ratio of the distance x2 between the two intersections I of one lobe with neighboring lobes and the radius r1 of the circle being in the range of from 0.67 to 1.11.

17. The star shaped catalyst body for the decomposition of N₂O according to claim 16,
wherein the elemental composition of the catalyst corresponds to an oxidic mixture containing form 50 to 80 % by weight of Al₂O₃, 0.1 to 30 % by weight of CuO and 0.1 to 40 % by weight of oxides M(II)O of the one or more of the further metals, preferably ZnO.

18. The star shaped catalyst body for the decomposition of N₂O according to any one of claims 16 or 17, wherein at least 70% by weight of the catalyst for the decomposition of N₂O are in the spinel phase.

19. A reactor for the catalytic decomposition of nitrous oxide N₂O in a gas mixture obtained in the preparation of nitric acid by catalytic oxidation of ammonia which contains in this order in the flow direction a noble metal gauze catalyst, a heat exchanger and a catalyst bed for the decomposition of N₂O which is installed between the noble metal catalyst and the heat exchanger so that the hot gas mixture obtained from the catalytic oxidation of ammonia is brought into contact with the catalyst for the decomposition of N₂O before subsequent cooling, **characterized in that** the catalyst bed contains the catalyst for the decomposition of N₂O in the form of a star-shaped body having six lobes as defined in any one of claims 16-18.

20. The use of a star shaped catalyst body as defined in any one of claims 1 to 18 for the decomposition of N₂O in N₂O containing gas mixtures.

## Patentansprüche

1. Verfahren zur katalytischen Zersetzung von Distickstoffoxid N₂O in einem bei der Herstellung von Salpetersäure durch katalytische Oxidation von Ammoniak in einem Reaktor, der in Flussrichtung in dieser Reihenfolge einen Edelmetallnetzkatalysator und einen Wärmetauscher enthält, erhaltenen Gasgemisch an einem Katalysator zur Zersetzung von N₂0, der zwischen dem Edelmetallnetzkatalysator und dem Wärmetauscher angeordnet ist, so dass das aus der katalytischen Oxidation von Ammoniak erhaltene heiße Gasgemisch vor dem anschließenden Abkühlen mit dem Katalysator zur Zersetzung von N₂O kontaktiert wird, **dadurch gekennzeichnet, dass** der Katalysator in Form eines sternförmigen Körpers mit sechs Lappen vorliegt, wobei das Verhältnis des maximalen Radius r2 in dem Stern zum Radius r1 eines Kreises, der die Schnittpunkte der Lappen verbindet, im Bereich von 1,9 bis 3,61 liegt, das Verhältnis der Fläche F1 innerhalb dieses Kreises zu der summierten Fläche F2 der Lappen außerhalb dieses Kreises im Bereich von 0,54 bis 0,90 liegt, das Verhältnis des Abstands x2 zwischen den beiden Schnittpunkten I eines Lappens mit benachbarten Lappen und dem Radius r1 des Kreises im Bereich von 0,67 bis 1,11 liegt.

2. Verfahren nach Anspruch 1, wobei der Katalysator zur Zersetzung von N₂O eine Verbindung der Formel M_{X}Al₂O₄ enthält, wobei M für Cu oder eine Mischung von Cu mit einem oder mehreren weiteren Metallen M, die aus der Gruppe bestehend aus Sn, Pb, Zn, Mg, Ca, Sr und Ba ausgewählt sind, steht und x für 0,6 bis 1,5 steht.

3. Verfahren nach Anspruch 1 oder 2, wobei das Verhältnis von Radius r2 zu Radius r1 1,9 bis 3,0 beträgt.

4. Verfahren nach einem der Ansprüche 1 bis 3, wobei jeder Lappen gerade äußere Wände mit einer gerundeten Oberseite aufweist, wobei das Verhältnis der Länge x1 vom Schnittpunkt I eines Lappens und benachbarter Lappen zum Ende der geraden äußeren Wand zum Abstand x2 zwischen zwei Schnittpunkten I eines Lappens und benachbarter Lappen 0,87 bis 1,45 beträgt.

5. Verfahren nach einem der Ansprüche 1 bis 4, wobei jeder Lappen gerade äußere Wände mit einer gerundeten Oberseite aufweist, wobei der Winkel α zwischen der geraden äußeren Wand und der geraden Linie x2 zwischen zwei Schnittpunkten I eines Lappens und benachbarter Lappen 70 bis 140 Grad beträgt.

6. Verfahren nach einem der Ansprüche 1 bis 5, wobei jeder Lappen gerade äußere Wände mit einer gerundeten Oberseite aufweist, wobei das Verhältnis der Länge x2 zwischen zwei Schnittpunkten I eines Lappens und benachbarter Lappen zur Länge x3 zwischen den Enden der geraden äußeren Wände 0,9 bis 1,8 beträgt.

7. Verfahren nach einem der Ansprüche 1 bis 6, wobei jeder Lappen gerade äußere Wände mit einer gerundeten Oberseite aufweist und das Verhältnis der Lappenfläche des Trapezes F3, das durch die geraden äußeren Wände eines Lappens begrenzt ist, und der äußeren Lappenfläche F4 außerhalb dieses Trapezes 2,5 bis 14,35 beträgt.

8. Verfahren nach einem der Ansprüche 1 bis 6, wobei die Querschnittsfläche 0,19 bis 13,9 mm² beträgt.

9. Verfahren nach einem der Ansprüche 1 bis 8, wobei der maximale Radius r2 0,4 bis 6 mm, vorzugsweise 1,35 bis 2,25 mm oder 1,62 bis 3,1 mm, beträgt.

10. Verfahren nach einem der Ansprüche 1 bis 9, wobei der Kreisradius r1 0,25 bis 3,4 mm beträgt.

11. Verfahren nach Anspruch 1 bis 10, wobei die elementare Zusammensetzung des Katalysators einer oxidischen Mischung entspricht, die 50 bis 80 Gew.-% Al₂O₃, 0,1 bis 30 Gew.-% CuO und 0,1 bis 40 Gew.-% Oxide M(II)O des einen oder der mehreren der weiteren Metalle enthält.

12. Verfahren nach Anspruch 10 oder 11, wobei es sich bei dem weiteren Metall um Zn handelt.

13. Verfahren nach einem der Ansprüche 1 bis 12, wobei mindestens 70 Gew.-% des Katalysators zur Zersetzung von N₂O in der Spinellphase vorliegen.

14. Verfahren nach einem der Ansprüche 1 bis 13, wobei die Höhe des Katalysatorbetts des Katalysators zur Zersetzung von N₂O 2 bis 50 cm beträgt.

15. Verfahren nach einem der Ansprüche 1 bis 14, wobei die Zersetzung von N₂O bei 600 bis 950 °C bei einem Druck von 1 bis 15 bar durchgeführt wird.

16. Sternförmiger Katalysatorkörper mit sechs Lappen zur Zersetzung von N₂0, der eine Verbindung der Formel M_{X}Al₂O₄ enthält, wobei M für Cu oder eine Mischung von Cu mit einem oder mehreren weiteren Metallen M, die aus der Gruppe bestehend aus Sn, Pb, Zn, Mg, Ca, Sr und Ba ausgewählt sind, steht und x für 0,6 bis 1,5 steht, wobei das Verhältnis des maximalen Radius r2 in dem Stern zum Radius r1 eines Kreises, der die Schnittpunkte der Lappen verbindet, im Bereich von 1,9 bis 3,61, vorzugsweise von 2,17 bis 3,61, liegt, das Verhältnis der Fläche F1 innerhalb dieses Kreises zu der summierten Fläche F2 der Lappen außerhalb dieses Kreises im Bereich von 0,54 bis 0,90 liegt, das Verhältnis des Abstands x2 zwischen den beiden Schnittpunkten I eines Lappens mit benachbarten Lappen und dem Radius r1 des Kreises im Bereich von 0,67 bis 1,11 liegt.

17. Sternförmiger Katalysatorkörper zur Zersetzung von N₂O nach Anspruch 16, wobei die elementare Zusammensetzung des Katalysators einer oxidischen Mischung entspricht, die 50 bis 80 Gew.-% Al₂O₃, 0,1 bis 30 Gew.-% CuO und 0,1 bis 40 Gew.-% Oxide M(II)O des einen oder der mehreren der weiteren Metalle, vorzugsweise ZnO, enthält.

18. Sternförmiger Katalysatorkörper zur Zersetzung von N₂O nach einem der Ansprüche 16 oder 17, wobei mindestens 70 Gew.-% des Katalysators zur Zersetzung von N₂O in der Spinellphase vorliegen.

19. Reaktor zur katalytischen Zersetzung von Distickstoffoxid N₂O in einem bei der Herstellung von Salpetersäure durch katalytische Oxidation von Ammoniak, der in Flussrichtung in dieser Reihenfolge einen Edelmetallnetzkatalysator, einen Wärmetauscher und ein Katalysatorbett zur Zersetzung von N₂O, das zwischen dem Edelmetallkatalysator und dem Wärmetauscher eingebaut ist, enthält, so dass das aus der katalytischen Oxidation von Ammoniak erhaltene heiße Gasgemisch vor dem anschließenden Abkühlen mit dem Katalysator zur Zersetzung von N₂O kontaktiert wird, **dadurch gekennzeichnet, dass** das Katalysatorbett den Katalysator zur Zersetzung von N₂O in Form eines sternförmigen Körpers mit sechs Lappen gemäß einem der Ansprüche 16-18 enthält.

20. Verwendung eines sternförmigen Katalysatorkörpers gemäß einem der Ansprüche 1 bis 18 zur Zersetzung von N₂O in N₂O enthaltenden Gasgemischen.

## Revendications

1. Procédé pour la décomposition catalytique d'oxyde nitreux N₂O dans un mélange gazeux obtenu dans la préparation d'acide nitrique par oxydation catalytique d'ammoniac, dans un réacteur qui contient, dans cet ordre dans le sens de l'écoulement, un catalyseur de gaze de métal noble et un échangeur de chaleur, sur un catalyseur pour la décomposition de N₂O qui est installé entre le catalyseur de gaze de métal noble et l'échangeur de chaleur de telle sorte que le mélange gazeux chaud obtenu par l'oxydation catalytique d'ammoniac est mis en contact avec le catalyseur pour la décomposition de N₂O avant refroidissement ultérieur, **caractérisé en ce que** le catalyseur se présente sous la forme d'un corps en étoile à six lobes, dans lequel le rapport du rayon maximal r2 dans l'étoile sur le rayon r1 d'un cercle reliant les intersections des lobes est dans la plage de 1,9 à 3,61, le rapport de la surface F1 à l'intérieur de ce cercle sur la surface additionnée F2 des lobes à l'extérieur de ce cercle est dans la plage de 0,54 à 0,90, le rapport de la distance x2 entre les deux intersections I d'un lobe avec des lobes voisins et du rayon r1 du cercle est dans la plage de 0,67 à 1,11.

2. Procédé selon la revendication 1, dans lequel le catalyseur pour la décomposition de N₂O contient un composé de formule M_{X}Al₂O₄, dans laquelle M est Cu ou un mélange de Cu avec un ou plusieurs autres métaux M, choisis dans le groupe constitué par Sn, Pb, Zn, Mg, Ca, Sr et Ba, et x est dans la plage de 0,6 à 1,5.

3. Procédé selon la revendication 1 ou 2, dans lequel le rapport du rayon r2 sur le rayon r1 est de 1,9 à 3,0.

4. Procédé selon l'une quelconque des revendications 1 à 3, dans lequel chaque lobe a des parois externes rectilignes avec un sommet arrondi, dans lequel le rapport entre la longueur x1 depuis l'intersection I d'un lobe et de lobes voisins jusqu'à l'extrémité de la paroi externe rectiligne et la distance x2 entre deux intersections I d'un lobe et de lobes voisins est de 0,87 à 1,45.

5. Procédé selon l'une quelconque des revendications 1 à 4, dans lequel chaque lobe a des parois externes rectilignes avec un sommet arrondi, dans lequel l'angle a entre la paroi externe rectiligne et la ligne droite x2 entre deux intersections I d'un lobe et de lobes voisins est de 70 à 140 degrés.

6. Procédé selon l'une quelconque des revendications 1 à 5, dans lequel chaque lobe a des parois externes rectilignes avec un sommet arrondi, dans lequel le rapport entre la longueur x2 entre deux intersections I d'un lobe et de lobes voisins et la longueur x3 entre les extrémités des parois externes rectilignes est de 0,9 à 1,8.

7. Procédé selon l'une quelconque des revendications 1 à 6, dans lequel chaque lobe a des parois externes rectilignes avec un sommet arrondi et le rapport entre l'aire de lobe du trapèze F3 confiné par les parois externes rectilignes d'un lobe et l'aire de lobe externe F4 à l'extérieur de ce trapèze est de 2,5 à 14,35.

8. Procédé selon l'une quelconque des revendications 1 à 6, dans lequel l'aire de section transversale est de 0,19 à 13,9 mm².

9. Procédé selon l'une quelconque des revendications 1 à 8, dans lequel le rayon maximal r2 est de 0,4 à 6 mm, de préférence de 1,35 à 2,25 mm ou de 1,62 à 3,1 mm.

10. Procédé selon l'une quelconque des revendications 1 à 9, dans lequel le rayon du cercle r1 est de 0,25 à 3,4 mm.

11. Procédé selon la revendication 1 à 10, dans lequel la composition élémentaire du catalyseur correspond à un mélange oxydique contenant 50 à 80 % en poids de Al₂O₃, 0,1 à 30 % en poids de CuO et 0,1 à 40 % en poids d'oxydes M(II)O d'un ou plusieurs des autres métaux.

12. Procédé selon la revendication 10 ou 11, dans lequel l'autre métal est Zn.

13. Procédé selon l'une quelconque des revendications 1 à 12, dans lequel au moins 70 % en poids du catalyseur pour la décomposition de N₂O sont dans la phase spinelle.

14. Procédé selon l'une quelconque des revendications 1 à 13, dans lequel la hauteur du lit de catalyseur du catalyseur pour la décomposition de N₂O est de 2 à 50 cm.

15. Procédé selon l'une quelconque des revendications 1 à 14, dans lequel la décomposition de N₂O est effectuée à une température de 600 à 950 °C à une pression de 1 à 15 bars.

16. Corps de catalyseur en forme d'étoile à six lobes pour la décomposition d'un composé contenant du N₂O de formule M_{X}Al₂O₄, dans laquelle M représente Cu ou un mélange de Cu avec un ou plusieurs autres métaux M, choisis dans le groupe constitué par Sn, Pb, Zn, Mg, Ca, Sr et Ba, et x est dans la plage de 0,6 à 1,5, le rapport du rayon maximal r2 dans l'étoile sur le rayon r1 d'un cercle reliant les intersections des lobes étant dans la plage de 1,9 à 3,61, de préférence de 2,17 à 3,61, le rapport de la surface F1 à l'intérieur de ce cercle sur la surface additionnée F2 des lobes à l'extérieur de ce cercle étant dans la plage de 0,54 à 0,90, le rapport de la distance x2 entre les deux intersections I d'un lobe avec des lobes voisins et du rayon r1 du cercle est dans la plage de 0,67 à 1,11.

17. Corps de catalyseur en forme d'étoile pour la décomposition de N₂O selon la revendication 16, dans lequel la composition élémentaire du catalyseur correspond à un mélange oxydique contenant 50 à 80 % en poids de Al₂O₃, 0,1 à 30 % en poids de CuO et 0,1 à 40 % en poids d'oxydes M(II)O d'un ou plusieurs des autres métaux, de préférence ZnO.

18. Corps de catalyseur en étoile pour la décomposition de N₂O selon l'une quelconque des revendications 16 ou 17, dans lequel au moins 70 % en poids du catalyseur pour la décomposition de N₂O sont dans la phase spinelle.

19. Réacteur pour la décomposition catalytique d'oxyde nitreux N₂O dans un mélange gazeux obtenu lors de la préparation d'acide nitrique par oxydation catalytique d'ammoniac, qui contient, dans cet ordre dans le sens de l'écoulement, un catalyseur de gaze de métal noble, un échangeur de chaleur et un lit de catalyseur pour la décomposition de N₂O qui est installé entre le catalyseur de métal noble et l'échangeur de chaleur de sorte que le mélange gazeux chaud obtenu par oxydation catalytique d'ammoniac soit mis en contact avec le catalyseur pour la décomposition du N₂O avant refroidissement ultérieur, **caractérisé en ce que** le lit de catalyseur contient le catalyseur pour la décomposition de N₂O sous la forme d'un corps en étoile ayant six lobes tel que défini dans l'une quelconque des revendications 16 à 18.

20. Utilisation d'un corps de catalyseur en étoile tel que défini dans l'une quelconque des revendications 1 à 18 pour la décomposition de N₂O dans des mélanges gazeux contenant N₂O.
